# EUROPEAN PATENT APPLICATION

(11) **EP 1 788 199 A2**
(43) Date of publication of application: **23.05.2007**
(21) Application number: 06124325.9
(22) Date of filing: 17.11.2006
(51) Int. Cl.: F01D 17/16, F01D 5/30

(54) **Variable stator vane assembly with a wear resistant coating**

(30) Priority: 22.11.2005 US 285637
(71) Applicant: General Electric Company, Schenectady, NY 12345 (US)
(72) Inventor: Gutknecht, James Edward, Cincinnati, OH 45240 (US)
(74) Representative: Illingworth-Law, William Illingworth

(57) **Abstract**

A variable stator vane assembly (10) includes a variable-stator-vane airfoil (12), an arcuate forward shroud (14), and an arcuate aft shroud (16). The airfoil is capable of being located in a compressor of a gas turbine engine. The airfoil has a vane stem (22) having a wear-resistant coating (24), and the vane stem projects radially inward when located in the compressor. The arcuate forward shroud (14) has a first surface groove (26) having a wear-resistant coating (28), and the arcuate aft shroud (16) has a second surface groove (30) having a wear-resistant coating (32). The arcuate forward and aft shrouds are capable of being positioned with the first and second surface grooves together defining a hole containing the vane stem. The wear-resistant coating of the vane stem is in contact, apart from any intervening lubricant, with the wear-resistant coatings of the first and second surface grooves when the vane stem is rotating in the hole.

## Description

### BACKGROUND OF THE INVENTION

The present invention relates generally to gas turbine engines, and more particularly to a variable stator vane assembly of a gas turbine engine.

Variable stator vane assemblies have been used in aircraft gas-turbine-engine compressors since 1950. Such compressors contain alternating rows of stator vanes and rotating blades. The vane airfoils of a row of variable stator vanes are turned about their longitudinal axes to a different position for different incoming airflows to straighten the airflow which will encounter the adjacent downstream row of rotating compressor blades. Each vane airfoil has a radially-inwardly projecting vane stem which typically rotates in a polymeric bushing in a hole of an inner shroud sector. A typical inner shroud sector has a circumferential extent of approximately 30 degrees and has holes to accommodate each vane and each containing a bushing surrounding a vane stem. The inner shroud sector helps define the compressor airflow path. A typical inner shroud sector has two vane stem line-contact retention pins, wherein a retention pin is positioned in a groove of a vane stem to help retain all of the vane stems in the holes. A seal support is attached to the shroud sector. Inner shroud sectors of 30 to 180 degrees are known.

Still, scientists and engineers continue to seek improved variable stator vane assemblies.

### BRIEF DESCRIPTION OF THE INVENTION

A first expression of an embodiment of the invention is a variable stator vane assembly including a variable-stator-vane airfoil, an arcuate forward shroud, and an arcuate aft shroud. The airfoil is capable of being located in a compressor of a gas turbine engine. The airfoil has a vane stem having a wear-resistant coating, and the vane stem projects radially inward when located in the compressor. The arcuate forward shroud has a first surface groove having a wear-resistant coating, and the arcuate aft shroud has a second surface groove having a wear-resistant coating. The arcuate forward and aft shrouds are capable of being positioned with the first and second surface grooves together defining a hole containing the vane stem. The wear-resistant coating of the vane stem is in contact, apart from any intervening lubricant, with the wear-resistant coatings of the first and second surface grooves when the vane stem is rotating in the hole.

A second expression of an embodiment of the invention is a variable-stator-vane-assembly including a variable-stator-vane airfoil, an arcuate forward shroud, and an arcuate aft shroud. The airfoil is located in a compressor of a gas turbine engine. The airfoil has a radially-inwardly projecting vane stem having a wear-resistant coating. The arcuate forward shroud has a first surface groove having a wear-resistant coating, and the arcuate aft shroud has a second surface groove having a wear-resistant coating. The arcuate forward and aft shrouds are positioned with the first and second surface grooves together defining a hole containing the vane stem. The wear-resistant coating of the vane stem is in contact, apart from any intervening lubricant, with the wear-resistant coatings of the first and second surface grooves when the vane stem is rotating in the hole.

In the one example of the first and/or second expressions of the embodiment of the invention, the elimination of the bushings provides a lighter-weight design. In the same or a different example, the vane stem terminates in an annular flange which overlies at least a portion of the arcuate forward and aft shrouds when the vane stem is contained in the hole which provides a superior vane stem radial-retention feature than is provided by a conventional line-contact retention pin. In the same or a different example, the wear-resistant coatings consist essentially of tungsten carbide which provides excellent wear resistance for operating temperatures of substantially 400 degrees Fahrenheit to substantially 1000 degrees Fahrenheit, such temperature range being expected to be encountered by variable stator vane assemblies for state-of-the-art gas turbine engine designs and such temperature range extending beyond the operating temperature limit of conventional polymeric or graphite bushings.

### BRIEF DESCRIPTION OF THE DRAWINGS

The accompanying drawings illustrate an embodiment of the invention, by way of example, wherein:
Figure 1 is a schematic, front-elevational, cutaway view of an above-centerline portion of an embodiment of a gas turbine engine including a variable stator vane assembly illustrating the 180-degree arcuate forward shroud and the radially-inner portions of the variable-stator-vane airfoils of the variable stator vane assembly with the seal support of the assembly removed for clarity;
Figure 2 is view of the variable stator vane assembly of figure 1 taken along lines 2-2 of figure 1 with the airfoils removed;
Figure 3 is a cross-sectional view of the variable stator vane assembly of figure 1 taken along lines 3-3 of figure 1 with the seal support added;
Figure 4 is a view of the arcuate forward and aft shrouds of figure 3 with the wear-resistant coatings enlarged for visibility;
Figure 5 is a view of the radially-inner portion of the airfoil, including the vane stem, of figure 3 with the wear-resistant coating enlarged for visibility; and
Figure 6 is a cross-sectional view of the variable stator vane assembly of figure 1 taken along lines 6-6 of figure 1 with the seal support added.

### DETAILED DESCRIPTION OF THE INVENTION

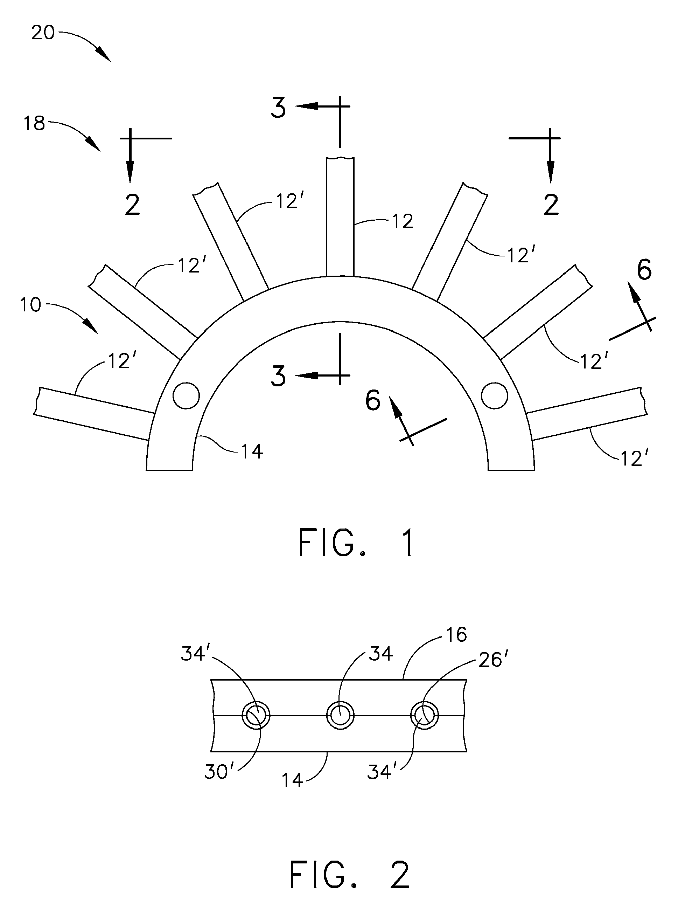

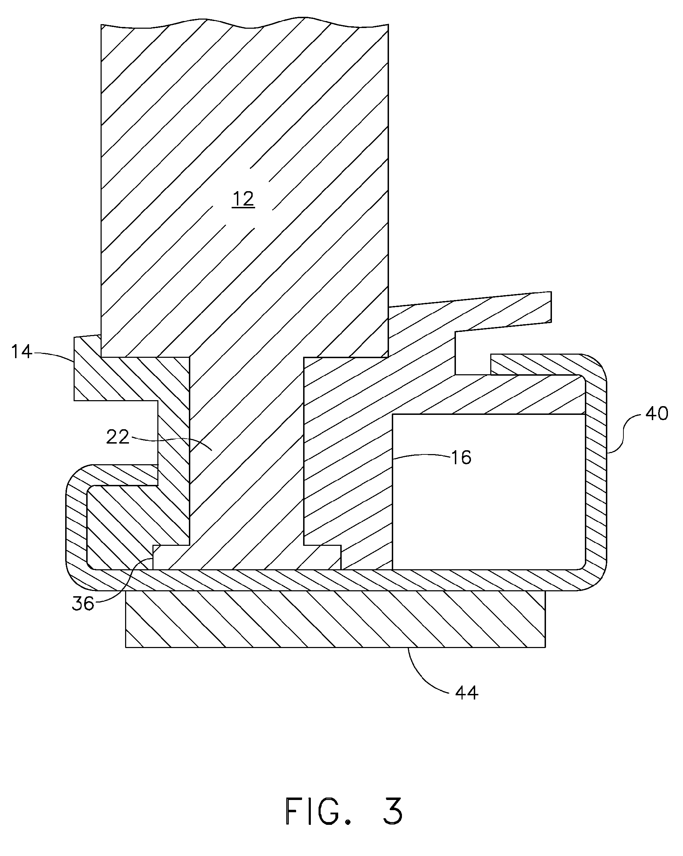

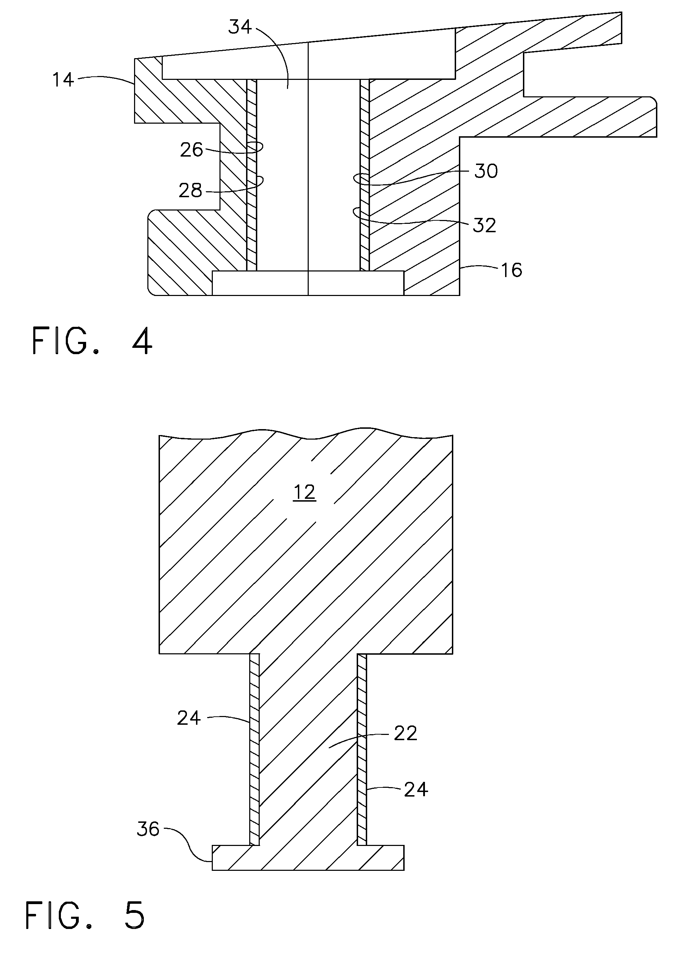

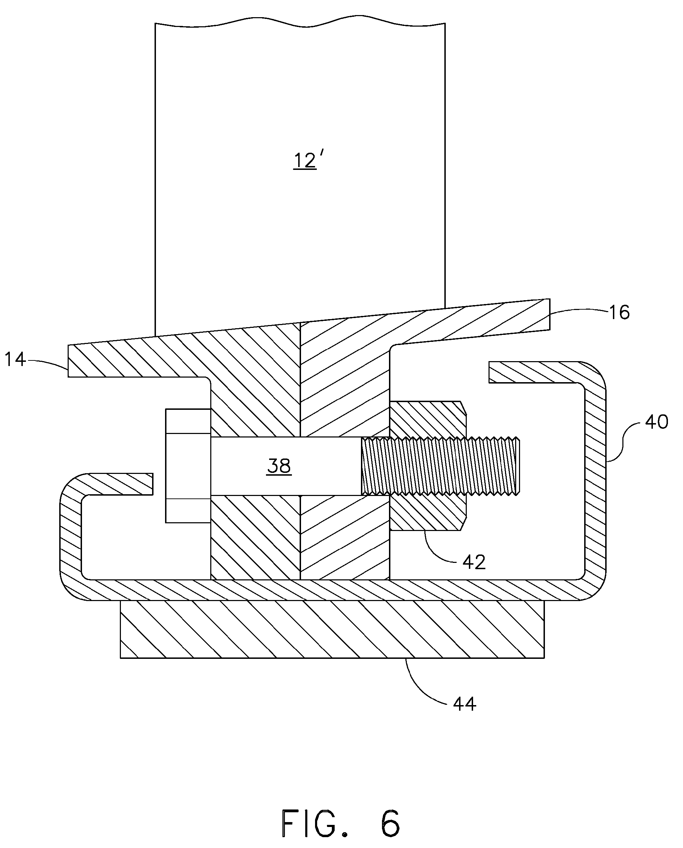

Referring now to the drawing, figures 1-6 disclose an embodiment of the invention. A first expression of the embodiment of figures 1-6 is for a variable stator vane assembly 10 including a variable-stator-vane airfoil 12, an arcuate forward shroud 14, and an arcuate aft shroud 16. The airfoil 12 is disposable in a compressor 18 of a gas turbine engine 20 (only an inner shroud and vane portion of a compressor of the engine being shown in figure 1). The airfoil 12 has a vane stem 22 having a wear-resistant coating 24, and the vane stem 22 projects radially inward when located in the compressor 18. The arcuate forward shroud 14 has a first surface groove 26 having a wear-resistant coating 28, and the arcuate aft shroud 16 has a second surface groove 30 having a wear-resistant coating 32. The arcuate forward and aft shrouds 14 and 16 are disposable with the first and second surface grooves 26 and 30 together defining a hole 34 containing the vane stem 22. The wear-resistant coating 24 of the vane stem 22 is in contact, apart from any intervening lubricant, with the wear-resistant coatings 28 and 32 of the first and second surface grooves 26 and 30 when the vane stem 22 is rotating in the hole 34. In one example, the arcuate forward and aft shrouds 14 and 16 together define an inner shroud sector.

It is noted that a wear-resistant coating of a component is a coating, wherein the coating is more resistant to abrasive wear from a relatively moving abrading surface having contact with the coating, and wherein the component is less resistant to abrasive wear from the same relatively moving abrading surface having the same contact with the component. In one example, the wear-resistant coating is substantially 0.10 to 0.15 millimeters thick. It is also noted that "apart from any intervening lubricant" is not to be construed as requiring an intervening lubricant. It is further noted that describing two components as being in mutual contact when rotation is occurring does not prevent such components from being in mutual contact when rotation is not occurring.

In one enablement of the first expression of the embodiment of figures 1-6, the variable stator vane assembly 10 includes a plurality of additional variable-stator-vane airfoils 12' (which are substantially identical to the airfoil 12) having wear-resistant-coated vane stems. In one variation, the arcuate forward and aft shrouds 14 and 16 have a plurality of pairs of wear-resistant-coated additional first and second surface grooves 26' and 30'. In one modification, the arcuate forward and aft shrouds 14 and 16 are disposable with the pairs of wear-resistant-coated additional first and second surface grooves 26' and 30' defining a plurality of additional holes 34' containing a corresponding one of the wear-resistant-coated vane stems of the additional variable-stator-vane airfoils 12'.

In one arrangement of the first expression of the embodiment of figures 1-6, the arcuate forward and aft shrouds 14 and 16 each have a circumferential extent of at least 30 degrees. In one variation, the arcuate forward shroud 14 has a circumferential extent of substantially 180 degrees, and the arcuate aft shroud 16 has a circumferential extent of substantially 180 degrees. In one example, the 180 degrees facilitates the use of a split outer compressor casing (not shown) for maintenance reasons, as can be appreciated by those skilled in the art. Other circumferential extents are left to the artisan.

In one application of the first expression of the embodiment of figures 1-6, the wear-resistant coatings 28 and 32 of the first and second surface grooves 26 and 30 are lubricated to reduce friction from rotation of the vane stem 22 in the hole 34. In the same or a different application, the wear-resistant coating 24 of the vane stem 22 is lubricated to reduce friction from rotation of the vane stem 22 in the hole 34. In one example, such lubrication is provided by a lubricant bonded to, and/or un-bonded on, the wear-resistant coatings.

In one choice of materials of the first expression of the embodiment of figures 1-6, the wear-resistant coatings 24, 28 and 32 of the vane stem 22 and of the first and second surface grooves 26 and 30 consist essentially of a ceramic. In one variation, the ceramic consists essentially of tungsten carbide. In one modification, the wear-resistant coatings 24, 28 and 32 of the vane stem 22 and of the first and second surface grooves 26 and 30 are lubricated with graphite. In one example, the vane stem 22 and the arcuate forward and aft shrouds 14 and 16 consist essentially of steel or titanium.

In one implementation of the first expression of the embodiment of figures 1-6, the vane stem 22 terminates in an annular flange 36 which overlies at least a portion of the arcuate forward and aft shrouds 14 and 16 when the vane stem 22 is contained in the hole 34. In a first variation, the variable stator vane assembly 10 includes a forward-to-aft-shroud retaining bolt 38 which is disposed through the arcuate forward and aft shrouds 14 and 16 when the vane stem 22 is disposed in the hole 34. In one example of the first variation, the variable stator vane assembly 10 includes a seal support 40 attached to the arcuate forward and aft shrouds 14 and 16 when the vane stem 22 is contained in the hole 34. In a second variation, the variable stator vane assembly 10 includes a seal support 40 which is attachable to the arcuate forward and aft shrouds 14 and 16 when the vane stem 22 is contained in the hole and which, when attached, solely retains together the forward and aft shrouds 14 and 16 (i.e., the bolts 38 are not used in the second variation).

A second expression of the embodiment of figures 1-6 is for a variable stator vane assembly 10 including a variable-stator-vane airfoil 12, an arcuate forward shroud 14, and an arcuate aft shroud 16. The airfoil 12 is disposed in a compressor 18 of a gas turbine engine 20. The airfoil 12 has a radially-inwardly projecting vane stem 22 having a wear-resistant coating 24. The arcuate forward shroud 14 has a first surface groove 26 having a wear-resistant coating 28, and the arcuate aft shroud 16 has a second surface groove 30 having a wear-resistant coating 32. The arcuate forward and aft shrouds 14 and 16 are disposed with the first and second surface grooves 26 and 30 together defining a hole 34 containing the vane stem 22. The wear-resistant coating 24 of the vane stem 22 is in contact, apart from any intervening lubricant, with the wear-resistant coatings 28 and 32 of the first and second surface grooves 26 and 30 when the vane stem 22 is rotating in the hole 34.

In one example of the first, and/or second expression of the embodiment of figures 1-6, the compressor 18 is a high pressure compressor and the gas turbine engine 20 is an aircraft gas turbine engine. In one configuration, the variable stator vane assembly 10 includes a lever arm (not shown) which is moved by an actuator (not shown) as commanded by a controller (not shown) and which turns a trunnion (not shown) extending radially outward from the airfoil 12. In one variation, a nut 42 is threaded to the disposed retaining bolt 38, and a seal 44 is attached to the seal support 40, wherein the seal 44 interacts with labyrinth seal teeth (not shown) attached to the high pressure rotor (not shown) of the gas turbine engine 20.

It is noted that the applications, choices of materials, implementations, etc. of the first expression of the embodiment of figures 1-6 are equally applicable to the second expression of the embodiment of figures 1-6.

While the present invention has been illustrated by a description of several expressions of an embodiment, it is not the intention of the applicant to restrict or limit the spirit and scope of the appended claims to such detail. Numerous other variations, changes, and substitutions will occur to those skilled in the art without departing from the scope of the invention.

## Claims

1. A variable stator vane assembly (10) comprising:
a) a variable-stator-vane airfoil (12) disposable in a compressor (18) of a gas turbine engine (20), wherein the airfoil has a vane stem (22) having a wear-resistant coating (24), and wherein the vane stem projects radially inward when disposed in the compressor;
b) an arcuate forward shroud (14) having a first surface groove (26) having a wear-resistant coating (28); and
c) an arcuate aft shroud (16) having a second surface groove (30) having a wear-resistant coating (32), wherein the arcuate forward and aft shrouds are disposable with the first and second surface grooves together defining a hole (34) containing the vane stem, and wherein the wear-resistant coating of the vane stem is in contact, apart from any intervening lubricant, with the wear-resistant coatings of the first and second surface grooves when the vane stem is rotating in the hole.

2. The variable stator vane assembly of claim 1, also including a plurality of additional variable-stator-vane airfoils (12') having wear-resistant-coated vane stems (22), wherein the arcuate forward and aft shrouds have a plurality of pairs of wear-resistant-coated additional first and second surface grooves (26' and 30'), and wherein the arcuate forward and aft shrouds are disposable with the pairs of wear-resistant-coated additional first and second surface grooves defining a plurality of additional holes (34') containing a corresponding one of the wear-resistant-coated vane stems of the additional variable-stator-vane airfoils.

3. The variable stator vane assembly of claim 2, wherein the arcuate forward and aft shrouds each have a circumferential extent of at least 30 degrees.

4. The variable stator vane assembly of claim 3, wherein the arcuate forward shroud has a circumferential extent of substantially 180 degrees, and wherein the arcuate aft shroud has a circumferential extent of substantially 180 degrees.

5. The variable stator vane assembly of claim 1, wherein the wear-resistant coatings of the first and second surface grooves are lubricated to reduce friction from rotation of the vane stem in the hole.

6. The variable stator vane assembly of claim 1, wherein the wear-resistant coating of the vane stem is lubricated to reduce friction from rotation of the vane stem in the hole.

7. The variable stator vane assembly of claim 1, wherein the wear-resistant coatings of the vane stem and of the first and second surface grooves consist essentially of a ceramic.

8. The variable stator vane assembly of claim 7, wherein the ceramic consists essentially of tungsten carbide.

9. The variable stator vane assembly of claim 1, wherein the vane stem terminates in an annular flange (36) which overlies at least a portion of the arcuate forward and aft shrouds when the vane stem is contained in the hole.

10. The variable stator vane assembly of claim 9, also including a forward-to-aft-shroud retaining bolt (38) which passes through the arcuate forward and aft shrouds when the vane stem is contained in the hole.
